(19) **Europäisches Patentamt**

**European Patent Office**

**Office européen des brevets**

(11) Veröffentlichungsnummer: **0 192 038**
**B1**

(12) **EUROPÄISCHE PATENTSCHRIFT**

(45) Veröffentlichungstag der Patentschrift: **16.05.90**

(21) Anmeldenummer: **86100448.9**

(22) Anmeldetag: **15.01.86**

(51) Int. Cl.⁵: **C 04 B 41/62, C 04 B 41/45**

(54) **Verfahren zum Erhöhen der Festigkeit eines porösen Körpers.**

(30) Priorität: **16.02.85 DE 3505427**

(43) Veröffentlichungstag der Anmeldung:
**27.08.86 Patentblatt 86/35**

(45) Bekanntmachung des Hinweises auf die
Patenterteilung:
**16.05.90 Patentblatt 90/20**

(84) Benannte Vertragsstaaten:
**AT BE CH DE FR GB IT LI LU NL SE**

(56) Entgegenhaltungen:
**DE-B-2 254 146**
**US-A-3 980 604**

(73) Patentinhaber: **IMCHEMIE**
**Steinkonservierungen GmbH & Co. KG**
**Kronprinzenstrasse 11**
**D-5630 Remscheid (DE)**

(72) Erfinder: **Ibach, Hermann Wolf**
**Stockder Strasse 138**
**D-5630 Remscheid (DE)**

(74) Vertreter: **Patentanwaltsbüro Cohausz & Florack**
**Postfach 14 01 20 Schumannstrasse 97**
**D-4000 Düsseldorf 1 (DE)**

Courier Press, Leamington Spa, England.

**Beschreibung**

Die Erfindung betrifft ein Verfahren zum Erhöhen der Festigkeit eines porösen Körpers und dessen Widerstandsfähigkeit gegen Verwitterung, bei dem zunächst dem Körper in einem unter Vakuum zu setzenden Behälter Gase und Feuchtigkeit entzogen, der Behälter mit einer mit Hilfe eines Härters oder durch Energiezufuhr polymerisierbaren Tränkflüssigkeit gefüllt, der Körper völlig eingetaucht und in der Tränkflüssigkeit so lange unter Überdruck gehalten wird bis die Tränkflüssigkeit ausreichend tief in den Körper eingedrungen ist, worauf die Tränkflüssigkeit insbesondere unter Beibehaltung des Überdrucks abgelassen und das Aushärten der vom Körper aufgenommenen Tränkflüssigkeit innerhalb des Behälters eingeleitet wird.

Aus dem deutschen patent 22 54 146 ist es bekannt, poröse Körper insbesondere Naturstein vor Verwitterung dadurch dauerhaft zu schützen, daß der Körper vollständig mit einem organischen Harz, insbesondere Methylmethacrylat getränkt und anschließend polymerisiert wird. Sollen hierbei morbide Körper bis in die aller äußersten Randzonen gehärtet werden, ist es erforderlich, an der Oberfläche möglichst wenig an Tränkflüssigkeit zu verlieren um hierdurch die witterungsbeständige Zone bis zur Oberfläche hin zu haben. Während der ersten Phase des Polymerisierens verdampft aber aus der Oberfläche eine bestimmte Menge des organischen Harzes, so daß eine äußere Schicht von 1 bis 3 mm Tiefe nur schwach konserviert ist. Um dies zu vermeiden, wurde bei dem bekannten Verfahren eine Übermenge Härter der Tränkflüssigkeit zugesetzt um möglichst schnell zumindest ein Angelieren in der äußersten Schicht und in der Oberfläche zu erreichen. Durch diese Überdosis an Härter erfolgt aber auch eine sehr schnelle Polymerisation der gesamten Tränkflüssigkeit, so daß das erhärtete Material sehr spröde wird.

Aufgabe der Erfindung ist es, ein Verfahren der eingangs genannten Art derart zu verbessern, daß das erhärtete Harz gleichmäßig bis in die äußerste Schicht des Körpers reicht ohne eine Übermenge an Härter zuvor beigeben zu müssen.

Diese Aufgabe wird erfindungsgemäß dadurch gelöst, daß während des Aushärtens der Körper von einem Inertgas umgeben ist.

Das Inertgas sorgt während der Überdruckphase und Aushärtungsphase innerhalb des Behälters dafür, daß die Inhibierung in der äußeren Schicht des getränkten Körpers, wie sie normalerweise in der äußeren Schicht durch den Sauerstoff erfolgt, unterbleibt und dadurch die Reaktion nicht durch eine Zusatzmenge von Härter und durch einen schnellen Anstieg der Temperatur überfahren werden muß. Hierdurch kann die Härtermenge wesentlich reduziert, insbesondere auf das normale Maß gebracht werden, so daß ein langsames, mildes polymerisieren des eingebrachten Harzes, z. B. Acrylharz, möglich ist. Hierdurch werden sehr hochwertige langkettige PMMA in dem Objekt erreicht, so daß die schützende Wirkung des Harzes bis zur äußersten Oberfläche des Körpers reicht. Als besonders günstiges Inertgas hat sich Stickstoff erwiesen.

Ein Ausführungsbeispiel des erfindungsgemäßen Verfahrens wird im folgenden näher beschrieben.

Ein poröser Stein, der verfestigt und gegen Verwitterung widerstandsfähig gemacht werden soll, wird nach der völligen Austrocknung in einen Behälter eingebracht, der unter Vakuum gesetzt wird. Das Vakuum soll möglichst hoch sein. Dabei wird der Stein entgast. Anschließend wird unter Aufrechterhaltung des Vakuums die Tränkflüssigkeit in den Behälter gegeben, so daß der Stein vollständig in die Tränkflüssigkeit eingetaucht ist. Das Vakuum kann dabei so hoch sein, daß die Tränkflüssigkeit gerade noch nicht siedet. Als Tränkflüssigkeit eignen sich lösungsmittelfreie Reaktionsharzsysteme, z.B. Acrylate, Polyester, Epoxyharze, Silicon-Kautschukharze, die einen Härter enthalten, der bis zu einer bestimmten Temperatur, insbesondere der Raumtemperatur, stabil ist, damit die Tränkflüssigkeit unterhalb dieser Temperatur nicht erhärtet und der bei Überschreiten, insbesonderestarkem Überschreite der bestimmten Temperatur, die Reaktion der Reaktionsharzsysteme und damit deren Aushärten einleitet.

Nachdem der Stein vollständig in der Tränkflüssigkeit liegt, wird der Behälter unter Überdruck, z. B. unter 15 atü, gesetzt. Dieser Überdruck bewirkt, daß die Tränkflüssigkeit schneller und tiefer in den porösen Körper eindringt als es mit Atmosphärendruck möglich wäre. Da der Stein vorher entgast war und unter Vakuum in die Tränkflüssigkeit eingetaucht wurde, würde Atmosphärendruck nur ein mäßiges tiefes und langsames Eindringen in die Poren des Steines bewirken. Der Überdruck wird mit Inertgas, insbesondere durch Stickstoff oder ein Edelgas aufgebaut und für eine bestimmte Zeit aufrechterhalten, die ein genügend tiefes Eindringen der Tränkflüssigkeit in den Stein ermöglicht. Danach wird die Tränkflüssigkeit abgelassen, wobei aber der Überdruck im Behälter aufrechterhalten wird. Das Aufrechterhalten des Überdrucks ist notwendig, um die vom Stein aufgenommene Tränkflüssigkeit nicht aus den poren des Steines austreten zu lassen.

Danach wird die Temperatur des Gases im Behälter derart erhöht, daß das Aushärten eingeleitet wird. Statt die Temperatur im Behälter zu erhöhen, kann auch eine Flüssigkeit, die unter Aufrechterhaltung des Überdrucks im Behälter in den Behälter eingelassen worden ist, soweit erwärmt werden, bis die Reaktion der Tränkflüssigkeit und damit deren Aushärtung eingeleitet ist. Während des Aushärtens muß ebenfalls der Überdruck aus demselben Grunde aufrechterhalten werden. Eine erfindungsgemäß ausreichende Differenz zwischen der normalen Behandlungstemperatur und der Temperatur für das Einleiten des Aushärtens beträgt etwa 80°C. Nach beendeter oder nahezu beendetem Aushärten kann der Behälter vom Überdruck entlastet werden. Der auf diese Weise behandelte, poröse und brüchige Stein ist fest geworden und geschützt gegen aggressive Stoffe, insbesondere gegen Verwitterung. Da die abgelassene Tränkflüssigkeit von selbst nicht aushärtet, kann sie über beliebig lange Zeit zum Tränken poröser Körper ohne Verlust an Wirksamkeit verwendet werden.

**Patentansprüche**

1. Verfahren zum Erhöhen der Festigkeit eines porösen Körpers und dessen Widerstandsfähigkeit gegen Verwitterung, bei dem zunächst dem Körper in einem unter Vakuum zu setzenden Behälter Gase und Feuchtigkeit entzogen, der Behälter mit einer mit Hilfe eines Härters oder durch Energiezufuhr polymerisierbaren Tränkflüssigkeit gefüllt, der Körper völlig eingetaucht und in der Tränkflüssigkeit so lange unter Überdruck gehalten wird bis die Tränkflüssigkeit ausreichend tief in den Körper eingedrungen ist, worauf die Tränkflüssigkeit insbesondere unter Beibehaltung des Überdrucks abgelassen und das Aushärten der vom Körper aufgenommenen Tränkflüssigkeit innerhalb des Behälters eingeleitet wird, dadurch gekennzeichnet, daß während des Aushärtens der Körper von einem Inertgas umgeben ist.

2. Verfahren nach Anspruch 1, dadurch gekennzeichnet, daß als Inertgas Stickstoff verwendet wird.

**Revendications**

1. Procédé pour l'augmentation de la résistance d'un corps poreux et de sa tenue aux intempéries, dans lequel tout d'abord on extrait du corps les gaz et l'humidité dans un récipient pouvant être placé sous vide, on remplit le récipient d'un liquide d'imprégnation polymérisable à l'aide d'un durcisseur ou par amenée d'énergie, on plonge le corps complètement dans le liquide d'imprégnation et on l'y maintient sous surpression jusqu'à ce que le liquide d'imprégnation ait pénétré suffisamment profondément dans le corps, après quoi on évacue le liquide d'imprégnation, en particulier en maintenant la surpression, et on amorce le durcissement du liquide d'imprégnation absorbé par le corps à l'intérieur du récipient, caractérisé en ce que, pendant le durcissement, le corps est entoué par un gaz inerte.

2. Procédé selon la revendication 1, caractérisé en ce qu'on utilise de l'azote comme gaz inerte.

**Claims**

1. A process for increasing the strength of a porous article and its resistivity to weathering, wherein gases and moisture are first removed from the article in a container to be evacuated, the container is filled with an impregnating liquid which can be polymerized by means of a hardener or by the supply of energy, and the article is fully immersed and retained under excess pressure in the impregnating liquid until the impregnating liquid has penetrated deeply enough into the article, whereafter the impregnating liquid is discharged, more particularly while maintaining the excess pressure, and the hardening of the impregnating liquid absorbed by the article is initiated inside the container, characterized in that during hardening the article is surrounded by an inert gas.

2. A process according to claim 1, characterized in that the inert gas used is nitrogen.